# EUROPÄISCHE PATENTSCHRIFT

(11) **EP 0 835 781 B1**
(45) Veröffentlichungstag und Bekanntmachung des Hinweises auf die Patenterteilung: **29.03.2000**
(21) Anmeldenummer: 97112458.1
(22) Anmeldetag: 21.07.1997
(51) Int. Cl.: B60J 10/00

(54) **Abdichtsystem für eine Fahrzeugtür**
Seal system for a vehicle door
Système d'étanchéité pour une porte de véhicule

(30) Priorität: 12.10.1996 DE 19642221
(43) Veröffentlichungstag der Anmeldung: 15.04.1998
(73) Patentinhaber: HÜBNER Gummi- und Kunststoff GmbH, D-34123 Kassel (DE)
(72) Erfinder: Mosaner, Olaf, 34130 Kassel (DE)
(74) Vertreter: WALTHER, WALTHER & HINZ Patentanwälte

(56) Entgegenhaltungen:
- CH-A- 399 925
- DE-A- 2 036 075
- DE-U- 9 406 445
- DE-U- 9 418 117
- FR-A- 2 377 513

## Beschreibung

Die Erfindung betrifft ein Abdichtsystem eine Fahrzeugtür, insbesondere für eine in einen Rahmen einlaufende Schiebetür eines Fahrzeugs gemäß dem Oberbegriff des Anspruchs 1.

Ein Abdichtsystem der eingangs genannten Art ist auch unter der Bezeichnung "Fingerschutzprofil" bekannt. Eine solche Dichtleiste, im folgenden auch Dichtlippe genannte umgibt die Tür umlaufend. Hierbei weist die Dichtleiste einen kurvenförmigen Verlauf auf, wobei die Dichtleiste im Bereich des Scheitelpunktes ihres kurvenförmigen Verlaufs an einer benachbarten Dichtleiste oder an dem Rahmen für die Tür anliegt.

Es ist nun bekannt, mit derartigen Dichtleisten Türen und hier insbesondere Schiebetüren abzudichten, die mit einer Einstiegsstufe versehen sind.

Hierbei kann das von der Seite auftreffende Wasser durch die Dichtleisten durchdringen, um dann an der Dichtleiste nach unten zu laufen, was aufgrund der Einstiegsstufe auch nicht zu Problemen führt, da das Wasser auf die Einstiegsstufe abgeleitet wird, von dort aus nach außen fließt und somit nicht in den Innenraum gelangen kann. Eine derartige Art der Abdichtung ist allerdings dann unbefriedigend, wenn die Türen bündig mit der Fußbodenkante abschließen. Dann nämlich fließt das Wasser, wenn es durch die Dichtleiste durchgedrungen ist, auf den Fahrzeugboden und verteilt sich dort.

Aus dem FR-2377513 A ist eine Türabdichtung der eingangs genannten Art für Fahrzeuge, insbesondere Kraftfahrzeuge, bekannt. Dabei sind zwei Dichtleisten jeweils an der Stirnseite des Fahrzeugrahmens bzw. der Tür angeordnet. Hierbei greifen die Dichtlippen der Dichtleisten schräg zur Türoberfläche verlaufend verzahnend ineinander. Nachteilig bei dieser bekannten Türabdichtung ist, daß bei seitlich von außen auf die Türdichtung auftreffendes Wasser die Dichtleisten nachgeben werden, und somit Wasser eintreten kann. Hierbei gilt, daß, je höher der von außen auf die einzelnen als Dichtlippen ausgebildeten Dichtleisten einwirkende Druck ist, um so mehr Wasser in den abzudichtenden Raum eintreten wird.

Der Erfindung liegt daher die Aufgabe zugrunde, ein Abdichtsystem der eingangs genannten Art bereitzustellen, bei dem mit zunehmendem Druck auf die Abdichteinheit, beispielsweise durch auftreffendes Wasser, die Dichtwirkung erhöht statt vermindert wird.

Die Aufgabe wird erfindungsgemäß durch die Merkmale des Anspruchs 1 gelöst.

Durch die Schrägstellung der Dichtleisten wird erreicht, daß von außen auftreffendes Wasser nicht durch die Abdichteinheit hindurchgelangen kann; dies insbesondere deswegen, weil je höher der Druck des von außen auf die Dichtleisten auftreffenden Wassers ist, umso größer die Dichtwirkung ist, da sich die Dichtleisten unter dem Druck von außen immer enger aneinander anschmiegen werden.

Nach einer vorteilhaften Ausführungsform ist jeweils eine zweite Dichtlippe vorgesehen. Hierbei ist die zweite Dichtlippe im Abstand zur ersten an dem Profilkörper angeordnet, da hierdurch die Dichtwirkung weiter erhöht wird.

Nach einem weiteren Merkmal der Erfindung ist vorgesehen, daß im Bereich der Anordnung der Dichtleiste der Profilkörper elastisch nachgiebig ausgebildet ist. Hierdurch wird erreicht, daß durch die hierbei erzeugte federnde Wirkung auf die Dichtleiste ein sicheres Anliegen der Dichtleiste an dem benachbarten Abdichtelement gewährleistet wird. Elastisch nachgiebig kann der Profilkörper in diesem Bereich beispielsweise dadurch gestaltet werden, daß der Profilkörper im Bereich der Anordnung der Dichtleiste bzw. Dichtleisten einen Hohlraum aufweist.

Durch das Abdichtsystem wird insbesondere eine in einem Fahrzeug angeordnete, mit der Außenwand des Fahrzeugs konturgleiche Schiebetür ohne Einstiegsstufe sicher gegen anstehendes Spritzwasser abgedichtet.

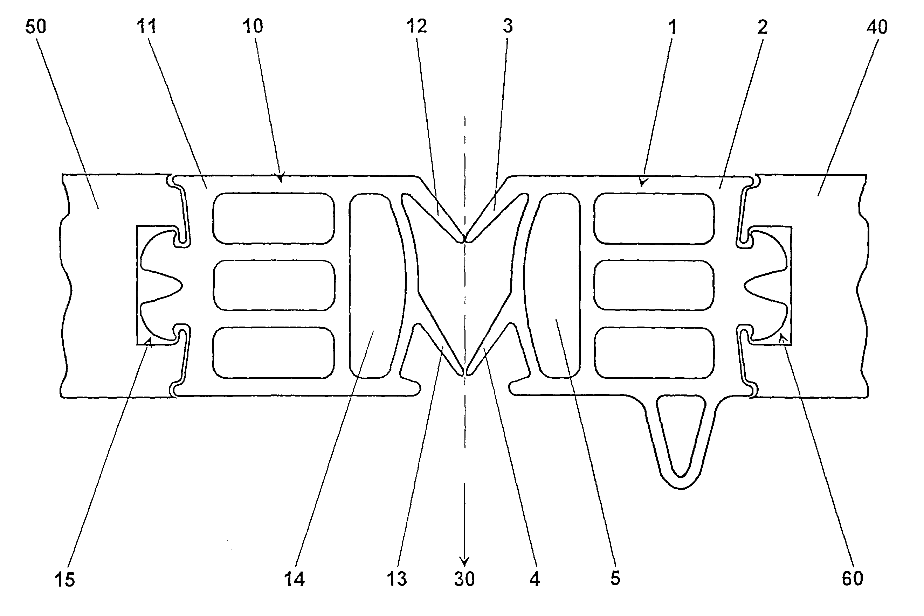

Anhand der Zeichnung wird die Erfindung nachstehend beispielhaft näher erläutert.

Die Zeichnung zeigt hierbei einen Schnitt durch zwei aneinander anliegende Abdichtelemente, wobei die Tür bzw. der Rahmen der Karosserie des Fahrzeugs angedeutet ist.

Die mit 1 und 10 bezeichneten Abdichtelemente besitzen den Profilkörper 2 bzw. 11, wobei jeder Profilkörper zwei Dichtleisten 3, 4 bzw. 12, 13 aufnimmt. Im Bereich der Anordnung der Dichtleiste 3, 4 bzw. 12, 13 weist der Profilkörper 2, 11 einen Hohlraum 5, 14 auf, der dafür sorgt, daß die Dichtleistenpaare elastisch nachgiebig durch den Hohlkörper aufnehmbar sind. Die Ausrichtung der Dichtleistenpaare 3, 4 bzw. 12, 13 ist derart gewählt, daß diese schrägverlaufend nach Art eines Dreiecks aufeinander zulaufend ausgebildet sind. Hierbei weist die Spitze des Dreiecks nach außen, das heißt auf die Fahrzeugaußenseite hin (Pfeil 30).

Dies bedeutet, daß wenn von außen, d.h. entgegen der Richtung des Pfeiles 30, das Wasser auf die aneinander anliegenden Dichtleisten 3, 4 bzw. 12, 13 der eine Abdichteinheit bildenden Abdichtleisten drückt, die Dichtwirkung umso höher ist, je höher der Druck entgegen der Pfeilrichtung des Pfeiles 30 ist. Es hat sich gezeigt, daß selbst bei einem Wasserdruck von 5 bar und einem Düsenabstand von 600 mm von der Abdichteinheit gemessen und bei unterschiedlichen Auftreffwinkeln kein Wasser die Abdichteinheit zu durchdringen vermag.

Zur Befestigung der Abdichtelemente 1, 10 weist jedes Abdichtelement in Richtung auf die Tür 40 bzw. den Karosserierahmen 50 zugerichtete, sich spreizende Klemmelemente 6 bzw. 15 auf, die in eine entsprechende Ausnehmung mit einem Hinterschnitt der Tür bzw. des Rahmens eingreifen.

## Patentansprüche

1. Abdichtsystem für eine Fahrzeugtür, insbesondere für eine in einen Rahmen einlaufende Schiebetür eines Fahrzeugs, umfassend zwei Abdichtelemente (1, 10) mit jeweils einem Profilkörper (2,11), der an einem Ende an der Tür oder am Rahmen befestigt ist, und der an dem gegenüberliegenden Ende mindestens eine Dichtlippe (3,4,12,13) besitzt,
**dadurch gekennzeichnet,**
daß die Abdichtelemente (1,10) derart im Fahrzeug angeordnet sind, daß die Dichtlippen (3,4,12,13) im geschlossenen Zustand der Fahrzeugtür in Richtung auf die Außenseite des Fahrzeugs weisend dreieckförmig aneinander anliegen.

2. Abdichtsystem nach Anspruch 1,
**dadurch gekennzeichnet,**
daß jeweils zwei Dichtlippen (3, 4; 12, 13) im Abstand zueinander an einem Profilkörper (2; 11) angeordnet sind.

3. Abdichtsystem nach einem der voranstehenden Ansprüche,
**dadurch gekennzeichnet,**
daß im Bereich der Anordnung der Dichtlippen (3, 4; 12, 13) am Profilkörper (2; 11), dieser elastisch nachgiebig ausgebildet ist.

4. Abdichtsystem nach Anspruch 3,
**dadurch gekennzeichnet,**
daß der Profilkörper (2; 11) im Bereich der Anordnung der Dichtlippe (3, 4; 12, 13) einen Hohlraum (5; 14) aufweist.

5. Abdichtsystem nach Anspruch 4,
**dadurch gekennzeichnet,**
daß das eine Abdichtelement (1) an der Stirnseite der Tür (40) und entsprechend das andere Abdichtelement (10) an der Stirnseite des Rahmens (50) angeordnet ist.

6. Verwendung eines Abdichtsystems gemäß einem oder mehreren der voranstehenden Ansprüche zur Abdichtung einer in einem Fahrzeug angeordneten, mit der Außenwand des Fahrzeugs konturgleichen Schiebetür (40) ohne gesonderte Eintrittsstufe im Türbereich des Fahrzeugs.

## Claims

1. Sealing system for a vehicle door, particularly for a sliding door running in a vehicle frame, comprising two sealing elements (1, 10) with one profile body (2, 11) each, said profile body being fastened by one end on the door or on the frame and having on its other, opposite end at least one sealing lip (3, 4, 12, 13),
**characterized in that** the sealing elements (1, 10) are accommodated in the vehicle so that the sealing lips (3, 4, 12, 13) are adjoining in a triangular shape pointing towards the outer side of the vehicle when the vehicle door is closed.

2. Sealing system according to claim 1,
**characterized in that** two sealing lips at a time (3, 4; 12, 13) are arranged at some distance from one another on a profile body (2; 11).

3. Sealing system according to one of the previous claims,
**characterized in that** the profile body (2; 11) is designed so as to be elastically flexible in the area of the accommodation of the sealing lips (3, 4; 12, 13).

4. Sealing system according to claim 3,
**characterized in that** the profile body (2; 11) is provided in the area of the accommodation of the sealing lip (3, 4; 12, 13) with a hollow space (5; 14).

5. Sealing system according to claim 4,
**characterized in that** the one sealing element (1) is arranged on the front side of the door (40) and that accordingly, the other sealing element (10) is arranged on the front side of the frame (50).

6. Use of a sealing system according to one or several of the previous claims for sealing a sliding door (40) arranged in a vehicle, which is flush against the outer wall of the vehicle and which has no separate step in the area of the vehicle's door.

## Revendications

1. Système d'étanchéité pour une porte de véhicule, plus particulièrement pour la porte coulissante d'un véhicule coulissant dans un cadre, comprenant deux éléments d'étanchéité (1, 10) ayant chacun un corps profilé (2, 11) fixé par une extrémité à la porte ou au cadre et possédant à l'autre extrémité au moins une lèvre d'étanchéité (3, 4, 12, 13),
**caractérisé en ce que** les éléments d'étanchéité (1, 10) sont disposés de telle sorte dans le véhicule que, quand la porte du véhicule est fermée, les lèvres d'étanchéité (3, 4, 12, 13) convergent en forme de triangle pointant vers l'extérieur du véhicule.

2. Système d'étanchéité selon la revendication 1,
**caractérisé en ce que** deux lèvres d'étanchéité à la fois (3, 4; 12, 13) sont disposées à quelque distance l'une par rapport à l'autre sur un corps profilé (2; 11).

3. Système d'étanchéité selon l'une des revendications précédentes,
**caractérisé en ce que** le corps profilé (2; 11) est flexible à l'endroit de positionnement des lèvres d'étanchéité (3, 4; 12, 13).

4. Système d'étanchéité selon la revendication 3,
**caractérisé en ce que** le corps profilé (2; 11) est pourvu d'une cavité (5; 14) à l'endroit de positionnement de la lèvre d'étanchéité (3, 4; 12, 13).

5. Système d'étanchéité selon la revendication 4,
**caractérisé en ce que** l'un des éléments d'étanchéité (1) est placé sur la face terminale de la porte (40) et que l'autre élément d'étanchéité (10) est placé de façon correspondante sur la face terminale du cadre (50).

6. Utilisation d'un système d'étanchéité selon une ou plusieurs des revendications précédentes pour étancher une porte coulissante (40) sans marche d'accès séparée prévue dans la région de ladite porte, celle-ci étant placée dans un véhicule et affleurant sur la paroi externe du véhicule.
